# EUROPÄISCHE PATENTSCHRIFT

(11) **EP 0 678 410 B1**
(45) Veröffentlichungstag und Bekanntmachung des Hinweises auf die Patenterteilung: **30.07.1997**
(21) Anmeldenummer: 95104531.9
(22) Anmeldetag: 28.03.1995
(51) Int. Cl.: B60H 1/34

(54) **Lufteintritt für eine Heizungs- oder Klinaanlage eines kraftfahrzeugs**
Air grill for a heating or air conditioning system of a motor vehicle
Entrée d'air pour l'installation de chauffage ou de climatisation d'un véhicule automobile

(30) Priorität: 22.04.1994 DE 4414036
(43) Veröffentlichungstag der Anmeldung: 25.10.1995
(73) Patentinhaber: Behr GmbH & Co., D-70469 Stuttgart (DE)
(72) Erfinder: Komowski, Michael, D-70619 Stuttgart (DE)
(74) Vertreter: Wilhelm & Dauster Patentanwälte European Patent Attorneys

(56) Entgegenhaltungen:
- DE-A- 3 421 323
- DE-A- 3 805 168
- DE-A- 4 228 866
- DE-A- 4 300 910
- FR-A- 2 585 636

## Beschreibung

Die Erfindung betrifft einen Lufteintritt für eine Heizungs- oder Klimaanlage eines Kraftfahrzeugs mit einer in einem Zuströmkanal für Außenluft angeordneten, regelbaren Stauluftklappe sowie mit einer zur Absperrung der Außenluftzufuhr in einem Ansauggehäuse des Lufteintritts schwenkbar gelagerten Umluftklappe.

Aus der DE 42 28 866 A1 ist ein Lufteintritt für eine Heizungs- oder eine Klimaanlage eines Kraftfahrzeugs bekannt, wobei in dem Ansauggehäuse des Lufteintritts eine Umluftklappe zum Absperren der Außenluftzufuhr in einen Innenraum des Kraftfahrzeugs vorgesehen ist. Die Umluftklappe stellt einen schalenartig gewölbten Körper dar, dessen Wandung kugelsegmentförmig gewölbt ist. Die Umluftklappe ist zwischen einer den Ansaugkanal des Lufteintritts freigebenden und einer diesen absperrenden Position in dem Ansduggehäuse schwenkbar gelagert. Um im Frischluftansaugkanal auch bei höheren Fahrgeschwindigkeiten des Kraftfahrzeugs einen gleichbleibenden Staudruck der Frischluft zu erzielen, ist bei vielen Kraftfahrzeugen im Bereich des Lufteintritts zusätzlich eine Stauluftklappe angeordnet, die abhängig von dem Druck der in den Lufteintritt einströmenden Frischluft regelbar ist. Eine solche Anordnung einer zusätzlichen Stauluftklappe im Lufteintritt ist in der DE 42 28 866 A1 nicht beschrieben. Für das Vorsehen einer solchen zusätzlichen Stauluftklappe sind im Gehäuse zusätzliche Lagerungen vorzusehen. Um eine wirksame Regelung der Stauluftklappe zu erreichen, muß zudem der Ansaugkanal des Lufteintritts zwischen der Lufteintrittsöffnung und der Umluftklappe gegenüber Ansauggehäusen ohne zusätzliche Stauluftklappe verlängert sein.

Aufgabe der Erfindung ist es, einen Lufteintritt der eingangs genannten Art zu schaffen, der trotz der Anordnung einer zusätzlichen Stauluftklappe kompakt und einfach aufgebaut ist.

Diese Aufgabe wird dadurch gelöst, daß die Stauluftklappe und die Umluftklappe koaxial zueinander angeordnet und in einer gemeinsamen Lagerung im Ansauggehäuse integriert sind. Dadurch weist der Lufteintritt trotz der Anordnung einer zusätzlichen Stauluftklappe eine kompakte Bauform und gegenüber dem bekannten Stand der Technik einen wesentlich kürzeren Zuströmkanal zum Ansaugen von Frischluft auf. Da sowohl für die Stauluftklappe als auch für die Umluftklappe eine gemeinsame Lagerung im Ansauggehäuse vorgesehen ist, wird ein relativ einfacher Aufbau des Lufteintritts erzielt. Eine zusätzliche Lagerung für die Stauluftklappe entfällt durch die erfindungsgemäße Lösung. Dadurch, daß die Stauluftklappe in die ohnehin vorhandene Lagerung der Umluftklappe integriert wird, ist es möglich, eine zusätzliche Stauluftklappe in einfacher Weise in bereits vorhandene Ansauggehäuse einzubauen. Die Stauluftklappe benötigt durch die erfindungsgemäße Lösung lediglich den Raum, der ohnehin für die Umluftklappe zur Verfügung stehen muß.

In Ausgestaltung der Erfindung sind sowohl die Stauluftklappe als auch die Umluftklappe als schalenförmig gewölbte Körper ausgebildet, deren Wandungen symmetrisch zur Lagerachse sind. In weiterer Ausgestaltung ist die Stauluftklappe radial innerhalb der Umluftklappe angeordnet und die Bewegungsbahnen von Stauluftklappe und Umluftklappe sind zumindest teilweise radial überlagert. Dadurch ist die eine Klappe radial innerhalb der anderen Klappe beweglich, wodurch die beiden Klappen eng aneinander liegend angeordnet werden können.

In weiterer Ausgestaltung der Erfindung sind die Stauluftklappe und die Umluftklappe durch eine kinematische Zwangssteuerung bewegungsübertragend miteinander verbunden. Dadurch wird mittels einer gemeinsamen Steuerung zum einen eine unabhängige Regelung der Stauluftklappe im geöffneten Zustand der Umluftklappe ermöglicht, zum anderen sind die Stauluftklappe und die Umluftklappe jedoch bei einer Absperrung der Frischluftzufuhr gemeinsam beweglich.

In weiterer Ausgestaltung der Erfindung, wobei für die äußere der beiden Luftklappen ein unterer Anschlagrand im Bereich des Ansaugtrichters sowie zwei obere, gehäusefeste Anschlagflächen für die geschlossene und die geöffnete Endposition der Luftklappe vorgesehen sind, sind die beiden gehäusefesten Anschlagflächen an zwei symmetrisch zu einer die Lagerachse enthaltenden vertikalen Radialebene ausgerichteten Anschlagrippen vorgesehen, die in Abstand zueinander angeordnet sind, und der untere Anschlagrand ist in einem Abstand zu einer die Lagerachse enthaltenden horizontalen Radialebene angeordnet, der größer ist als der Abstand einer Anschlagfläche zu der vertikalen Radialebene. Dadurch ist es möglich, die Lagerachse relativ zu dem Ansaugtrichter und damit auch relativ zu dem Gebläse in größerem Abstand anzuordnen, wodurch sich eine vergrößerte Bauhöhe für die Unterbringung der kinematischen Zwangssteuerung ergibt.

In weiterer Ausgestaltung der Erfindung sind die beiden Anschlagrippen durch einen Quersteg zu einem U-förmigen Profil verbunden. Dies ist eine kunststoffgerechte Ausgestaltung, durch die die beiden zueinander beabstandeten Anschlagrippen zu einem stabilen und nach außen abgedichteten Profil miteinander verbindbar sind.

In weiterer Ausgestaltung der Erfindung ist das U-förmige Profil als kreisbogenförmig gekrümmte Einbuchtung in die Gehäusewandung des Ansauggehäuses eingeformt. Dadurch ist das Profil mit den beiden Anschlagrippen einstückig mit der Gehäusewandung des Ansauggehäuses verbunden und kann bereits bei der Herstellung des aus Kunststoff bestehenden Ansauggehäuses mit eingeformt werden.

In weiterer Ausgestaltung der Erfindung ist das U-förmige Profil zur Versteifung über seine kreisbogenförmige Erstreckung mit wenigstens einer Querverstärkung versehen. Dadurch wird das U-förmige Profil über den Umfang des Ansauggehäuses versteift und trägt somit zur Versteifung des gesamten Ansauggehäuses bei.

Weitere Vorteile und Merkmale der Erfindung ergeben sich aus den Unteransprüchen sowie aus der nachfolgenden Beschreibung von bevorzugten Ausführungsbeispielen der Erfindung, die anhand der Zeichnungen dargestellt sind.
- Fig. 1: zeigt in einem Schnitt eine Ausführungsform eines erfindungsgemäßen Lufteintritts, bei dem das Ansauggehäuse sowohl mit einer Stauluft- als auch mit einer Umluftklappe versehen ist,
- Fig. 2: den Lufteintritt nach Fig. 1 in perspektivischer, aufgeschnittener Darstellung,
- Fig. 3: schematisch die Zwangssteuerung für ein gemeinsames Umschalten der Stauluftklappe und der Umluftklappe, ohne die unabhängige Regelung der Stauluftklappe zu beeinträchtigen,
- Fig. 4: die Zwangssteuerung für die Stauluftklappe und die Umluftklappe nach Fig. 3, bei der die Umluftklappe sich in der offenen und die Stauluftklappe in ihrer Stauposition befinden,
- Fig. 5: die Anordnung nach den Fig. 3 und 4, bei der jedoch die Umluftklappe geschlossen ist und die Stauluftklappe sich weiterhin in der Stauposition befindet,
- Fig. 6: in einer Schnittdarstellung eine weitere Ausführungsform eines erfindungsgemäßen Lufteintritts, der mit einer vergrößerten Umluftklappe versehen ist,
- Fig. 7: in perspektivischer Darstellung ein Ansauggehäuse des Lufteintritts nach Fig. 6, und
- Fig. 8: eine perspektivische Darstellung eines Ausschnittes des Ansauggehäuses nach Fig. 7 entlang der Schnittebene VIII-VIII in Fig. 7.

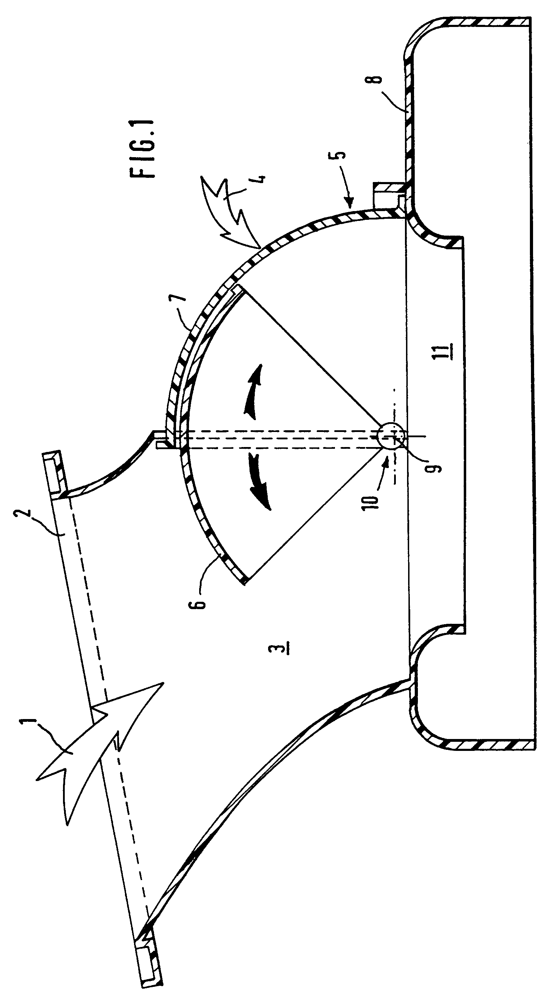

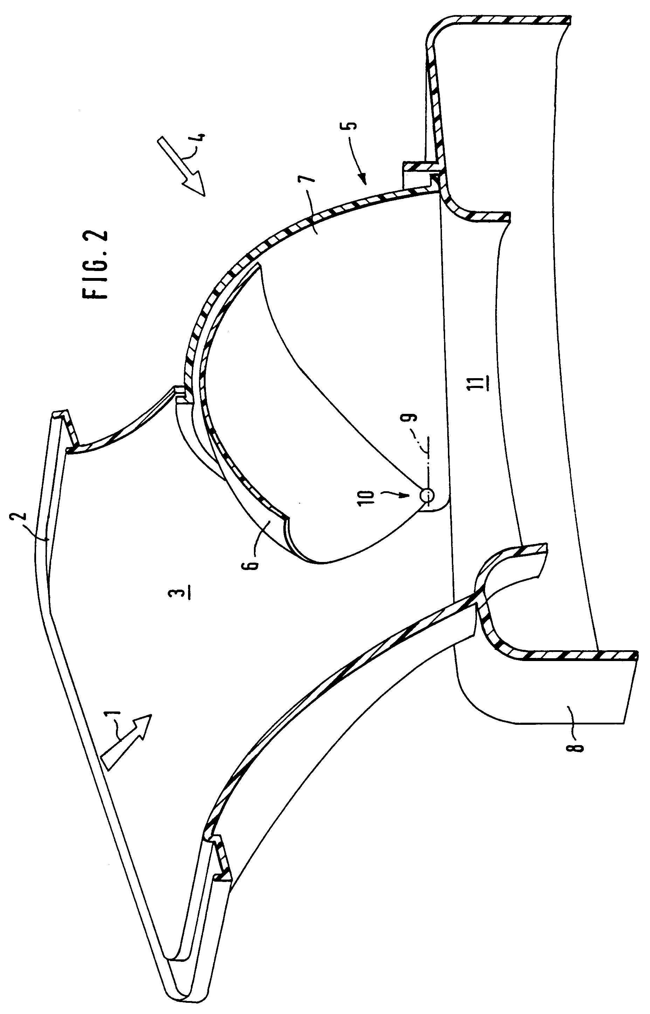

Ein Lufteintritt nach den Fig. 1 und 2 weist ein Ansauggehäuse (2, 8) auf, das aus Kunststoff hergestellt ist. Der Lufteintritt nach Fig. 1 und 2 ist für die Anordnung in einem Motorraum eines Kraftfahrzeugs - in Fahrtrichtung vor der Fahrgastzelle - vorgesehen. In seinem im Kraftfahrzeug eingebauten Zustand weist ein offener Eintrittsstutzen (2) schräg nach oben und dient zur Aufnahme von frischer Außenluft (1). Der Eintrittsstutzen (2) geht in einen Gehäuseteil (8) über, der mit einem Ansaugtrichter (11) zu einem nicht näher dargestellten Abströmkanal zu einem entsprechenden Gebläse für eine Heizungs- oder Klimaanlage versehen ist. Die durch einen Zuströmkanal (3) im Eintrittsstutzen (2) zugeführte frische Außenluft (1) wird daher durch den Ansaugtrichter (11) in den Abströmkanal geführt. Der Zuströmkanal (3) im Eintrittsstutzen (2) ist durch eine Umluftklappe (7) absperrbar, die die Hohlform einer Viertelkugel aufweist und daher auch als Kugelklappe bezeichnet wird. Die Umluftklappe (7) ist um eine Lagerachse (9) schwenkbar gelagert, die die Symmetrieachse der Viertelkugel darstellt und unmittelbar oberhalb des Ansaugtrichters (11) mittig und waagrecht angeordnet ist. Seitlich neben dem Eintrittsstutzen (2) und dem Zuströmkanal (3) ist im Ansauggehäuse (2, 8) eine Umluftöffnung (5) für einen Umluftkanal vorgesehen, der ebenfalls in den Ansaugtrichter (11) mündet. Durch den Umluftkanal ist dem Ansaugtrichter (11) Umluft (4) zuführbar, die im Innenraum des Kraftfahrzeugs umgewälzt wird. Die kugelschalenförmige Umluftklappe (7) verschließt in der dargestellten Position nach den Fig. 1 und 2 die Umluftöffnung (5) vollständig. In dieser Position gelangt daher frische Außenluft (1) durch den Ansaugtrichter (11) und eine entsprechende Heiz- oder Klimaanlage in den Innenraum des Kraftfahrzeugs. Die Umluftklappe (7) ist mittels einer Schaltvorrichtung in eine den Zuströmkanal (3) absperrende Position verschwenkbar, in der dem Ansaugtrichter (11) keine frische Außenluft (1) mehr zugeführt werden kann. In den darstellten Fig. 1 und 2 erfolgt dies durch eine Verschwenkung um 90° um die Lagerachse (9) im Gegenuhrzeigersinn. Der bis hierher beschriebene Lufteintritt nach den Fig. 1 und 2 entspricht zusammen mit seiner Umluftklappensteuerung dem Lufteintritt, wie er aus der DE 42 28 866 A1 bekannt ist.

Um unabhängig von der Geschwindigkeit der Außenluft (1) an der Öffnung des Eintrittsstutzens (2) im Bereich des Ansaugtrichters (11) des Ansauggehäuses (2, 8) einen gleichbleibenden Staudruck und damit gleichbleibende Strömungsverhältnisse zu erzielen, weist der Lufteintritt eine regelbare Stauluftklappe (6) auf. Die unterschiedlichen Strömungsgeschwindigkeiten der Außenluft (1) ergeben sich durch unterschiedlich hohe Fahrgeschwindigkeiten oder durch andere starke Windströmungen, denen das Kraftfahrzeug ausgesetzt ist. Die Stauluftklappe (6) entspricht in ihrer Form der Umluftklappe (7), so daß sie ebenfalls die schalenartige Hohlform einer Viertelkugel aufweist. Der Radius der Viertelkugel der Stauluftklappe (6) ist jedoch etwas geringer als der der Umluftklappe (7). Die Stauluftklappe (6) ist koaxial zur Umluftklappe (7) um die Lagerachse (9) schwenkbar angeordnet, wobei sie in die Lagerpunkte (10) der Umluftklappe (7) in den gegenüberliegenden Wandungen des Ansauggehäuses (2, 8) integriert ist. Die Lagerung der Stauluftklappe (6) in den Lagerpunkten (10) der Umluftklappe (7) erfolgt beim Ausführungsbeispiel in einfacher Weise durch zwei von der Symmetrieachse der Stauluftklappe (6) koaxial nach außen abragende Lagerzapfen, die in entsprechende Lagerbuchsen in den Lagerpunkten (10) der Umluftklappe (7) einsetzbar sind.

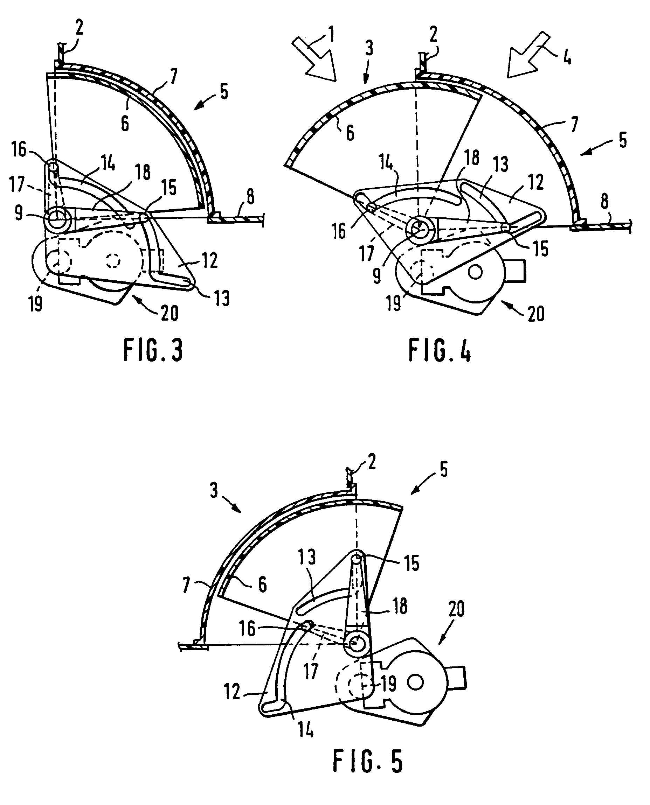

Um die Stauluftklappe (6) verschwenken zu können, ist diese starr auf einer Lagerwelle angeordnet, die koaxial zur Lagerachse (9) ist und nach außen aus dem Ansauggehäuse (2, 8) herausragt. Mit der Lagerwelle und damit auch mit der Stauluftklappe (6) drehfest verbunden ist ein Steuerhebel (17), der radial zur Lagerachse (9) von der Lagerwelle abragt. Der Steuerhebel (17) weist an seinem freien Ende einen nachfolgend noch näher beschriebenen Steuerzapfen (16) auf, der in eine Kulissenführung (14) einer ebenfalls nachfolgend noch näher beschriebenen Steuerscheibe (12) eingreift. Mit der Umluftklappe (7) ist eine zur Lagerachse (9) koaxiale und die Lagerwelle der Stauluftklappe (6) umschließende Hohlwelle starr verbunden, die ebenfalls nach außen aus dem Ansauggehäuse (2, 8) herausragt. Mit der Hohlwelle ist analog zum Steuerhebel (17) ein Steuerhebel (18) drehfest verbunden, der ebenfalls radial zur Lagerachse (9) von der Hohlwelle abragt. Der Steuerhebel (18) ist etwas länger als der Steuerhebel (17) und weist ebenfalls einen Steuerzapfen (15) auf, der in eine weitere Kulissenführung (13) der Steuerscheibe (12) eingreift. Der Steuerzapfen (15) befindet sich in größerem radialen Abstand zur Lagerachse (9) als der Steuerzapfen (16). Die Steuerscheibe (12) ist um eine Achse (19) schwenkbar gelagert, die parallel zur Lagerachse (9) in Abstand unterhalb dieser angeordnet ist. Die Steuerscheibe (12) ist drehfest mit einer zur Achse (19) koaxialen Antriebswelle verbunden, die von einem Antriebsaggregat (20) angetrieben wird. Mittels der Steuerscheibe (12) regelt das Antriebsaggregat (20) zum einen die Verschwenkung der Stauluftklappe (6) unabhängig von der Umluftklappe (7), zum anderen führt es die Umschaltung der Umluftklappe (7) zwischen der die Außenluft absperrenden und der den Zuströmkanal (3) freigebenden Endposition durch. Die Kulissenführung (14) für die Stauluftklappe (6) und die Kulissenführung (13) für die Umluftklappe (7) sind so gestaltet, daß zum einen in der geöffneten Position der Umluftklappe (7) nach den Fig. 3 und 4 eine von der Umluftklappe (7) unabhängige Regelung der Stauluftklappe (6) durch die Steuerscheibe (12) und das Antriebsaggregat (20) möglich ist. Die offene Endstellung der Stauluftklappe (6) ist dabei in Fig. 3, die geschlossene Endposition der Stauluftklappe (6) in Fig. 4 dargestellt. In der vollkommen geöffneten Position der Stauluftklappe (6) nach Fig. 3 befindet sich der Steuerzapfen (15) der Umluftklappe (7) am linken äußeren Ende der Kulissenführung (13). In der geschlossenen Position der Stauluftklappe (6) nach Fig. 4 befindet sich der Steuerzapfen (15) der Umluftklappe (7) am rechten Ende des kreissegmentförmigen Kurvenabschnittes der Kulissenführung (13). Dieser Kurvensabschnitt ist konzentrisch zur Achse (19) der Steuerscheibe (12), so daß eine Verschwenkung der Steuerscheibe (12) möglich ist, ohne die Umluftklappe (7) zu bewegen. Der Steuerzapfen (16) der Stauluftklappe (6) befindet sich hingegen in einem etwa radial zur Achse (19) nach außen abragenden Fortsatz der Kulissenführung (14), in der bei einer Schwenkbewegung der Steuerscheibe (12) eine Mitnahme der Stauluftklappe (6) erfolgt. Sobald die Steuerscheibe (12) jedoch aus der in Fig. 4 gezeigten Position weiter im Gegenuhrzeigersinn nach links verschwenkt, so wird der Steuerhebel (18) über den Steuerzapfen (15) und damit auch die Umluftklappe (7) mitgenommen und verschwenkt bei einer weiteren Schwenkbewegung der Steuerscheibe (12) bis in die abgesperrte Endposition, in der der Zuströmkanal (3) vollständig abgesperrt ist und lediglich Umluft (4) im Innenraum des Kraftfahrzeugs umgewälzt wird. Da der an den radialen Fortsatz der Kulissenführung (14) anschließende kreissegmentförmige Kurvenabschnitt konzentrisch zur Achse (19) gekrümmt ist, führt die Stauluftklappe (6) zwischen der in Fig. 4 dargestellten Position und der in Fig. 5 dargestellten Position keine weitere Schwenkbewegung durch. Bei einem entsprechend umgekehrten Verschwenken der Steuerscheibe (12) wird zunächst die Umluftklappe (7) aus ihrer geschlossenen Position nach Fig. 5 wieder in die offene Position nach Fig. 4 verschwenkt, bevor durch die Steuerscheibe (12) eine unabhängige Regelung der Stauluftklappe (6) möglich ist. Die derart ausgestaltete kinematische Zwangssteuerung für die Umluftklappe (7) und die Stauluftklappe (6) ist zweckmäßig, da die Stauluftklappe (6) ohnehin nicht in Funktion treten muß, solange die frische Außenluft (1) abgesperrt ist.

Bei einem nicht dargestellten Ausführungsbeispiel der Erfindung sind für die Stauluftklappe und die Umluftklappe zwei getrennte Antriebe vorgesehen. Der Antrieb für die Stauluftklappe regelt die Schwenkstellung der Stauluftklappe abhängig von den momentanen Druck- und Strömungsverhältnissen. Der Antrieb für die Umluftklappe zum Umschalten zwischen einer offenen und einer die Außenluft absperrenden Position wird entweder durch Knopfdruck vom Fahrzeuginnenraum aus gesteuert oder durch eine mit einem Schadstoffsensor verbundene Regelung innerhalb der Heizungs- oder Klimaanlage automatisch geregelt.

Das dargestellte Ausführungsbeispiel setzt als Stauluftklappe (6) und als Umluftklappe (7) jeweils eine Kugelklappe ein. In gleicher Weise setzt die Erfindung jedoch bei anderen Ausführungsbeispielen andere Klappenformen ein, die ebenfalls koaxial zueinander angeordnet sind und in einer gemeinsamen Lagerung integriert sind. Je nach Form und Aufbau dieser Klappen sind selbstverständlich auch die Zuström- und Abströmkanäle sowie die Umluftführung entsprechend abgestimmt ausgestaltet.

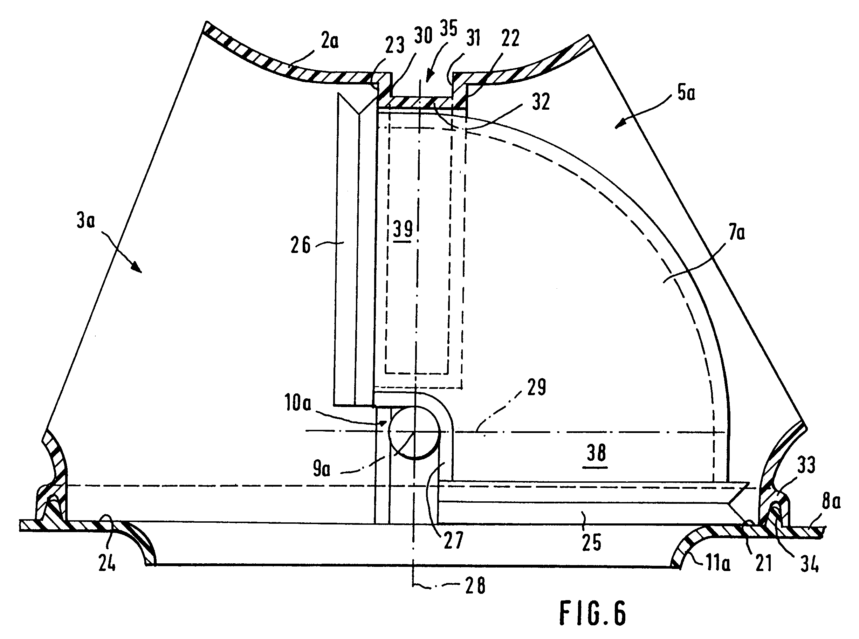

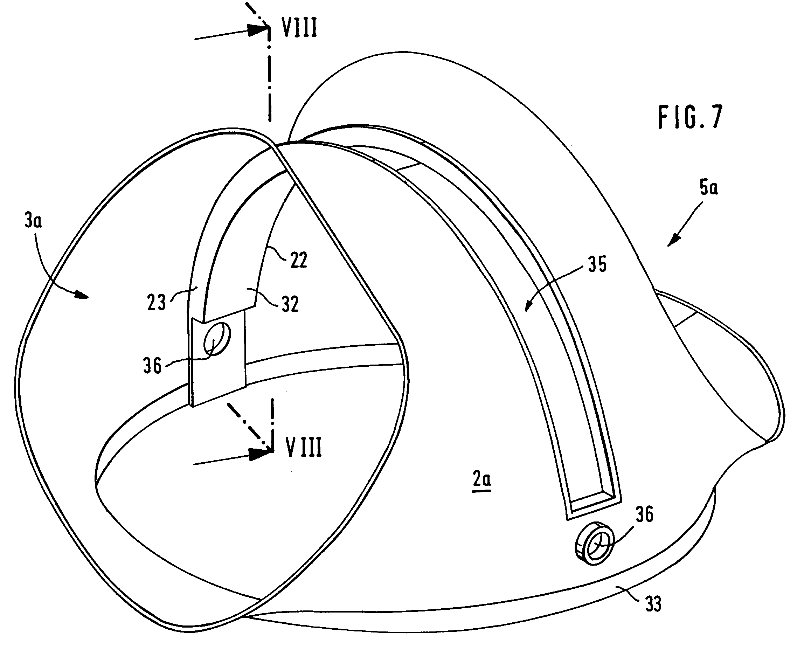

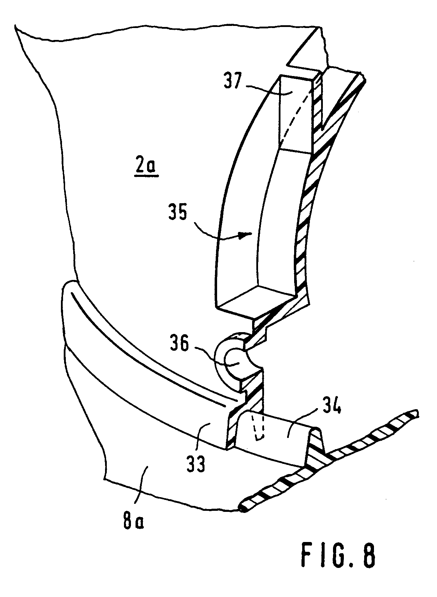

Bei dem Ausführungsbeispiel nach den Fig. 6 bis 8 ist ein Ansauggehäuse (2a, 8a) vorgesehen, das zweiteilig aus Kunststoff hergestellt ist. Das Ansauggehäuse (2a, 8a) unterteilt sich in einen Ansaugteil (2a) und einen Trichterteil (8a), wobei der Ansaugteil (2a) mit einem nutartig gestalteten Rand (33) auf einen stegartig nach oben abragenden Ansatz (34) des Trichterteiles (8a) form- und kraftschlüssig aufgesetzt ist. Der Ansaugteil (2a) weist einen Zuströmkanal (3a) für Frischluft und eine Umluftöffnung (5a) für einen Umluftkanal auf. In seinen wesentlichen Funktionselementen entspricht das Ansauggehäuse (2a, 8a) dem Ansauggehäuse (2, 8) gemäß den Fig. 1 und 2, wobei funktionsgleiche Elemente mit den gleichen Bezugszeichen unter Hinzufügung eines Buchstabens "a" versehen ist. In dem Ansaugteil (2a) ist eine Umluftklappe (7a) auf einer Lagerwelle (10a) um eine Lagerachse (9a) verschwenkbar gelagert. Die Lagerachse (9a) verläuft beim dargestellten Ausführungsbeispiel horizontal und lotrecht zur Zeichenebene gemäß Fig. 6. Innerhalb der Umluftklappe (7a) ist in nicht dargestellter Weise eine Stauluftklappe koaxial um die Lagerachse (9a) schwenkbar angeordnet, wobei die Anordnung und Steuerung der Stauluftklappe und der Umluftklappe (7a) dem zuvor beschriebenen Ausführungsbeispiel gemäß den Fig. 1 bis 5 entspricht, so daß zur weiteren Erläuterung auf die Beschreibung zu den Fig. 1 bis 5 verwiesen wird. Beim dargestellten Ausführungsbeispiel gemäß den Fig. 6 bis 8 ist der Ansaugtrichter (11a) und damit auch der Trichterteil (8a) gegenüber der Lagerachse (9a) in Abstand nach unten versetzt, so daß sich für die Steuerelemente der beiden Luftklappen eine vergrößerte Bauhöhe ergibt. Dadurch ist auch ein an den Ansaugtrichter (11a) anschließendes Gebläse in größerem Abstand unterhalb der Lagerachse (9a) angeordnet, als dies bei dem Ausführungsbeispiel nach den Fig. 1 bis 5 der Fall ist. Um dennoch ein dichtes Absperren der Umluftöffnung (5a) bzw. des Zuströmkanales (3a) zu ermöglichen, weist die Umluftklappe (7a) nicht mehr - wie gemäß dem Ausführungsbeispiel nach den Fig. 1 bis 5 - die Form einer Viertelkugelschale auf, sondern ist an ihren beiden Stirnseiten mit nach außen verlängerten Ansätzen (38, 39) versehen. Diese Ansätze (38, 39) verlängern den Stirnrand der Viertelkugelform der Umluftklappe (7a) auf Höhe der zueinander lotrechten Radialebenen (28 und 29) geradlinig nach außen, wie aus Fig. 6 erkennbar ist. An diese Ansätze (38, 39) schließen Dichtlippen (25, 26) an, deren auf die Lagerachse (9a) bezogene radiale Höhe größer ist als die der Ansätze (38, 39) und die der Umluftklappe (7a). Beim dargestellten Ausführungsbeispiel befindet sich die Umluftklappe (7a) in ihrer die Umluftöffnung (5a) verschließenden Endposition. In dieser Endposition liegt die Dichtlippe (25) parallel zu der horizontalen Radialebene (29) auf einem Anschlagrand (21) des Trichterteiles (8a) auf, an den der Ansaugtrichter (11a) nach unten anschließt. Gleichzeitig liegt die andere Dichtlippe (26), die parallel zu der vertikalen Radialebene (28) ausgerichtet ist, an einer Anschlagfläche (23) einer Anschlagrippe (30) an, die in Abstand zu der verikalen Radialebene (28) in Richtung des Zuströmkanales (3a) versetzt angeordnet ist. Die seitlich versetzte Anschlagrippe (30) ist Teil des Ansauggehäuses (2a) und ragt von der Gehäusewandung aus lotrecht und parallel zu der Radialebene (28) nach innen ab. Selbstverständlich ragt die kreisbogenförmig gekrümmte Anschlagrippe (30) nur so weit in das Gehäuseinnere hinein, daß sie die Schwenkbewegung der Umluftklappe (7a) nicht behindert. In gleichem Abstand zu der Radialebene (28) ist symmetrisch zu der Anschlagrippe (30) auf der der Radialebene (28) gegenüberliegenden Seite eine weitere Anschlagrippe (31) vorgesehen, die parallel zu der Anschlagrippe (30) ins Gehäuseinnere hineinragt. Durch diese Anschlagrippe (31) wird eine weitere Anschlagfläche (22) gebildet, die der Anschlagfläche (23) gegenüberliegt. Die beiden Anschlagflächen (22, 23) weisen jeweils den gleichen Abstand zu der Radialebene (28) auf. Dieser Abstand entspricht genau der Höhe des Ansatzes (39) der Umluftklappe (7a) und damit auch der Höhe des Ansatzes (38). Der Abstand des Anschlagrandes (21) des Trichterteiles (8a) zu der horizontalen Radialebene (29) ist daher um die Dicke der Dichtlippe (25) größer als der Abstand der Anschlagfläche (22, 23) zur vertikalen Radialebene (28). Da beide Radialebenen (28, 29) die Lagerachsen (9a) enthalten, ist auch der Abstand der Lagerachse (9a) zu dem Anschlagrand (21) so groß wie der Abstand der Radialebene (29) zu dem Anschlagrand (21). In ihrer die Umluftöffnung (5a) vollständig freigebenden, gegenüberliegenden Endposition liegt die Dichtlippe (25) an der Anschlagfläche (22) und die Dichtlippe (26) auf dem Anschlagrand (24) des Trichterteiles (8a) auf, wobei der Anschlagrand (24) in derselben Ebene liegt wie der Anschlagrand (21). Um die beiden Anschlagrippen (30 und 31) miteinander zu verbinden und gleichzeitig das Ansauggehäuse nach außen abzuschließen, sind die Stirnenden der beiden Anschlagrippen (30, 31) durch einen umlaufenden und sich kreisbogenförmig erstreckenden Quersteg (32) miteinander verbunden. Dadurch bilden die beiden Anschlagrippen (30 und 31) sowie der Quersteg (32) ein U-förmiges Profil, das einstückig in die Gehäusewandung eingeformt ist und so nach außen eine rinnenartige Nut (35) ergibt. Die Gestaltung der rinnenartigen Nut (35) ist aus Fig. 7 erkennbar. Zur Lagerung der Lagerwelle (10a) sind in den gegenüberliegenden Gehäusewandungen unterhalb der rinnenartigen Nut (35) zwei Lagerbuchsen (26) vorgesehen. Die rinnenartige Nut (35) endet auf beiden Seiten des Ansaugteiles (2a) des Ansauggehäuses (2a, 8a) in Abstand oberhalb der Lagerbuchsen (36). Um eine Abdichtung der Umluftklappe (7a) relativ zur Gehäusewandung auch im Bereich der beiden Lagerbuchsen (36) zu erzielen, sind die beiden Dichtlippen (26) auf beiden Seiten der Umluftklappe (7a) mit jeweils einer tulpenförmigen Dichtung (27) versehen, die von der Außenwandung der Umluftklappe (7a) aus - auf die Lagerachse (9a) bezogen - axial jeweils nach außen bis zur Gehäusewandung abragt. Um die rinnenartige Nut (35), d.h. das U-förmige Profil in der Gehäusewandung zu verstärken, sind über die kreisbogenförmige Erstreckung der rinnenartigen Nut (35) mehrere stegartige Querverstärkungen (37) (Fig. 8) vorgesehen.

## Patentansprüche

1. Lufteintritt für eine Heizungs- oder Klimaanlage eines Kraftfahrzeugs mit einer in einem Zuströmkanal (3) für Außenluft (1) angeordneten, regelbaren Stauluftklappe (6) sowie mit einer zur Absperrung der Außenluftzufuhr in einem Ansauggehäuse (2, 8) des Lufteintritts schwenkbar gelagerten Umluftklappe (7), dadurch gekennzeichnet, daß die Stauluftklappe (6) und die Umluftklappe (7) koaxial zueinander angeordnet und in einer gemeinsamen Lagerung (9, 10) im Ansauggehäuse (2, 8) integriert sind.

2. Lufteintritt nach Anspruch 1, dadurch gekennzeichnet, daß sowohl die Stauluftklappe (6) als auch die Umluftklappe (7) als schalenförmig gewölbte Hohlkörper ausgebildet sind, deren Wandungen symmetrisch zur Lagerachse (9) sind.

3. Lufteintritt nach Anspruch 2, dadurch gekennzeichnet, daß die Stauluftklappe (6) radial innerhalb der Umluftklappe (7) angeordnet ist und die Bewegungsbahnen von Stauluftklappe (6) und Umluftklappe (7) zumindest teilweise koaxial überlagert sind.

4. Lufteintritt nach Anspruch 2 oder 3, dadurch gekennzeichnet, daß die Stauluftklappe (6) und die Umluftklappe (7) entsprechend der Hohlform einer Viertelkugel gestaltet sind.

5. Lufteintritt nach einem der vorhergehenden Ansprüche, dadurch gekennzeichnet, daß die Stauluftklappe (6) und die Umluftklappe (7) durch eine kinematische Zwangssteuerung (12, 13, 14, 15, 16, 17, 18, 19, 20) bewegungsübertragend miteinander verbunden sind.

6. Lufteintritt nach Anspruch 5, dadurch gekennzeichnet, daß die kinematische Zwangssteuerung eine mit zwei getrennten Kurvenbahnen (13, 14) für die Stauluftklappe (6) und die Umluftklappe (7) versehene Steuerscheibe (12) aufweist, die durch einen Stellantrieb (20) verschwenkbar ist.

7. Lufteintritt nach Anspruch 6, dadurch gekennzeichnet, daß die Kurvenbahnen (13, 14) für die Bewegung der Stauluftklappe (6) und der Umluftklappe (7) derart überlagert sind, daß die Stauluftklappe (6) in einer geöffneten Position der Umluftklappe (7) unabhängig zu dieser beweglich ist und sich in der geschlossenen Position der Umluftklappe (7) in ihrer Stauposition befindet.

8. Lufteintritt nach Anspruch 2 oder 4, wobei für die äußere der beiden Luftklappen (7a) ein unterer Anschlagrand (21) im Bereich des Ansaugtrichters (11a) sowie zwei obere, gehäusefeste Anschlagflächen (22, 23) für die geschlossene und die geöffnete Endposition der Luftklappe (7a) vorgesehen sind, dadurch gekennzeichnet, daß die beiden gehäusefesten Anschlagflächen (22, 23) an zwei symmetrisch zu einer die Lagerachse (9a) enthaltenden vertikalen Radialebene (28) ausgerichteten Anschlagrippen (30, 31) vorgesehen sind, die in Abstand zu einander angeordnet sind, und daß der untere Anschlagrand (21) in einem Abstand zu einer die Lagerachse (9a) enthaltenden horizontalen Radialebene (29) angeordnet ist, der größer ist als der Abstand einer Anschlagfläche (22, 23) zu der vertikalen Radialebene (28).

9. Lufteintritt nach Anspruch 8, dadurch gekennzeichnet, daß die beiden Anschlagrippen (30, 31) durch einen Quersteg (32) zu einem U-förmigen Profil miteinander verbunden sind.

10. Lufteintritt nach Anspruch 9, dadurch gekennzeichnet, daß das U-förmige Profil als kreisbogenförmig gekrümmte Einbuchtung (35) in die Gehäusewandung des Ansauggehäuses (2a, 8a) eingeformt ist.

11. Lufteintritt nach Anspruch 10, dadurch gekennzeichnet, daß das U-förmige Profil zur Versteifung über seine kreisbogenförmige Erstreckung mit wenigstens einer Querverstärkung (37) versehen ist.

## Claims

1. Air inlet for a heating or air-conditioning unit of a motor vehicle, with an adjustable ram air valve (6) arranged in an inflow channel (3) for outside air (1) and with an air recirculation valve (7) mounted to swivel on bearings in a suction housing (2, 8) of the air inlet and so block the inflow of outside air, **characterized in that** the ram air valve (6) and the air recirculation valve (7) are positioned coaxially with one another and integrated in a common bearing (9, 10) in the suction housing (2, 8).

2. Air inlet according to Claim 1, **characterized in that** both the ram air valve (6) and the air recirculation valve (7) are formed as shell-like curved hollow bodies whose walls are symmetrical with respect to the bearing axis (9).

3. Air inlet according to Claim 2, **characterized in that** the ram air valve (6) is positioned radially within the air recirculation valve (7) and the movement paths of the ram air valve (6) and the air recirculation valve (7) are at least partially coaxially superimposed.

4. Air inlet according to Claims 2 or 3, **characterized in that** the ram air valve (6) and the air recirculation valve (7) are designed in the shape of a hollow quarter-sphere.

5. Air inlet according to any of the preceding Claims, **characterized in that** the ram air valve (6) and the air recirculation valve (7) are interconnected by a kinematic forced control system (12, 13, 14, 15, 16, 17, 18, 19, 20) which transmits movement from the one to the other.

6. Air inlet according to Claim 5, **characterized in that** the kinematic forced control system comprises a control plate (12) provided with two separate curved tracks (13, 14) for the ram air valve (6) and the air recirculation valve (7), the said plate (12) being swivelled by a positional drive (20).

7. Air inlet according to Claim 6, **characterized in that** the curved tracks (13, 14) for the movement of the ram air valve (6) and the air recirculation valve (7) are superimposed in such a way that when the air recirculation valve (7) is in an open position the ram air valve (6) can be moved independently of it, and when the air recirculation valve (7) is in its closed position the ram air valve (6) is in its ram position.

8. Air inlet according to Claims 2 or 4, in which a lower contact rim (21) is provided in the area of the suction funnel (11a) and two upper contact surfaces (22, 23) attached to the housing are provided for the closed and open end positions of the outermost of the two air valves (7a), **characterized in that** the two contact surfaces (22, 23) attached to the housing are formed on two contact ribs (30, 31) directed symmetrically with respect to a vertical radial plane (28) containing the bearing axis (9a), the said two ribs being a certain distance apart, and the lower contact rim (21) is positioned a distance away from a horizontal radial plane (29) containing the bearing axis (9a), which is larger than the distance of a contact surface (22, 23) from the vertical radial plane (28).

9. Air inlet according to Claim 8, **characterized in that** the two contact ribs (30, 31) are connected together by a transverse web (32) to form a U-shaped section.

10. Air inlet according to Claim 9, **characterized in that** the U-shaped section is moulded as a circular curved recess (35) in the housing wall of the suction housing (2a, 8a).

11. Air inlet according to Claim 10, **characterized in that** the U-shaped section is provided with at least one reinforcing piece (37) to increase its rigidity along its circular length.

## Revendications

1. Entrée d'air pour un système de chauffage ou de climatisation d'un véhicule automobile, comprenant :
- un volet (6) d'air dynamique réglable disposé dans un canal d'alimentation (3) pour l'air extérieur (1),
- ainsi qu'un volet (7) d'air de circulation logé de façon à pouvoir pivoter dans un boîtier (2, 8) d'aspiration de l'entrée d'air et servant à fermer l'arrivée d'air extérieur,
**caractérisée en ce que** le volet (6) d'air dynamique et le volet (7) d'air de circulation sont disposés de façon coaxiale l'un par rapport à l'autre et incorporés dans un logement commun (9, 10) du boîtier d'aspiration (2, 8).

2. Entrée d'air selon la revendication 1, caractérisée en ce que aussi bien le volet (6) d'air dynamique que le volet (7) d'air de circulation sont configurés comme des corps creux bombés en forme de bol dont les parois sont symétriques à l'axe (9) du palier.

3. Entrée d'air selon la revendication 2, caractérisée en ce que le volet (6) d'air dynamique est disposé radialement à l'intérieur du volet (7) d'air de circulation, et en ce que les trajectoires de déplacement du volet (6) d'air dynamique et du volet (7) d'air de circulation se chevauchent au moins partiellement de façon coaxiale.

4. Entrée d'air selon la revendication 2 ou 3, caractérisée en ce que le volet (6) d'air dynamique et le volet (7) d'air de circulation sont configurés d'une façon correspondant à la forme creuse d'un quart de sphère.

5. Entrée d'air selon l'une quelconque des revendications précédentes, caractérisée en ce que le volet (6) d'air dynamique et le volet (7) d'air de circulation sont reliés l'un à l'autre par une commande forcée (12, 13, 14, 15, 16, 17, 18, 19, 20) cinématique transmettant le mouvement.

6. Entrée d'air selon la revendication 5, caractérisée en ce que la commande forcée cinématique comprend un plateau de commande (12) équipé de deux pistes courbes (13, 14) séparées pour le volet (6) d'air dynamique et pour le volet (7) d'air de circulation, lequel plateau de commande peut pivoter grâce à un mécanisme de commande (20).

7. Entrée d'air selon la revendication 6, caractérisée en ce que les pistes courbes (13, 14) se chevauchent de façon telle, pour le déplacement du volet (6) d'air dynamique et du volet (7) d'air de circulation, que le volet (6) d'air dynamique est mobile dans une position ouverte du volet (7) d'air de circulation indépendamment de celui-ci, et qu'il se trouve dans sa position de prise d'air dynamique lorsque le volet (7) d'air de circulation est dans la position fermée.

8. Entrée d'air selon la revendication 2 ou 4, où il est prévu, pour le volet extérieur des deux volets d'air (7a), un bord d'arrêt inférieur (21) dans la zone de la trémie d'aspiration (11a), ainsi que deux surfaces d'arrêt (22, 23) supérieures, solidaires du boîtier, pour la position finale fermée et ouverte du volet d'air (7a),
**caractérisée en ce que** les deux surfaces d'arrêt (22, 23) solidaires du boîtier sont prévues au niveau de deux nervures d'arrêt (30, 31) symétriques par rapport à un plan radial (28) vertical contenant l'axe (9a) du boîtier, lesquelles nervures d'arrêt sont disposées à distance l'une de l'autre,
**et en ce que** le bord d'arrêt (21) inférieur est disposé à distance par rapport à un plan radial (29) horizontal contenant l'axe (9a) du boîtier, ladite distance étant supérieure à la distance d'une surface d'arrêt (22, 23) par rapport au plan radial vertical (28).

9. Entrée d'air selon la revendication 8, caractérisée en ce que les deux nervures d'arrêt (30, 31) sont reliées entre elles par une traverse (32) constituant un profilé en forme de U.

10. Entrée d'air selon la revendication 9, caractérisée en ce que le profilé en forme de U est moulé, comme concavité (35) courbée en forme d'arc de cercle, dans la paroi du boîtier d'aspiration (2a, 8a).

11. Entrée d'air selon la revendication 10, caractérisée en ce que le profilé en forme de U est doté au moins d'un renfort transversal (37) servant à raidir le profilé sur sa structure en forme d'arc de cercle.
